(19) Europäisches Patentamt
European Patent Office
Office européen des brevets

(11) **EP 1 746 005 A1**

(12) **EUROPÄISCHE PATENTANMELDUNG**

(43) Veröffentlichungstag:
**24.01.2007 Patentblatt 2007/04**

(51) Int Cl.:
*B60W 30/16* (2006.01)   *B60W 50/08* (2006.01)

(21) Anmeldenummer: **06115653.5**

(22) Anmeldetag: **19.06.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.07.2005 DE 102005033522**

(71) Anmelder: **ROBERT BOSCH GMBH**
**70442 Stuttgart (DE)**

(72) Erfinder:
• **Kaller, Jochen**
  **71229 Leonberg (DE)**
• **John, Dirk**
  **71272 Renningen (DE)**

(54) **Verfahren und Vorrichtung zur Benachrichtigung des Fahrers eines Kraftfahrzeugs**

(57) Die Erfindung betrifft ein Verfahren und eine Vorrichtung zur Benachrichtigung des Fahrers eines Kraftfahrzeuges mit einer Abstandsfühleinrichtung (5) und einem adaptiven Abstands- und Geschwindigkeitsregler (2), in dem eine Übernahmeaufforderungseinrichtung (17, 19) aktivierbar ist, die dem Fahrer mitteilt, dass eine kritische Annäherung an ein Zielobjekt erfolgt. Erfindungsgemäß ist in der Abstandsfühleinrichtung (5) ein Abstandswert (d0) für einen Abstand zwischen dem Kraftfahrzeug und einem Zielobjekt ermittelbar, in dem adaptiven Abstands- und Geschwindigkeitsregler (2) ein erster Streckenwert für eine Fahrerreaktionszeit (treak), ein zweiter Streckenwert für eine Verzögerung (aFZG), aus dem Abstandswert (d0) und den Streckenwerten ein voraussichtlicher Abstandswert (dmin) ermittelbar und der voraussichtliche Abstandswert (dmin) mit einem Schwellwert (ds) vergleichbar und die Übernahmeaufforderungseinrichtung (17, 19) dann aktivierbar, wenn der Abstandswert (dmin) den Schwellwert (ds) unterschreitet.

Fig. 1

EP 1 746 005 A1

**Beschreibung**

Die vorliegende Erfindung betrifft ein Verfahren und eine Vorrichtung zur Benachrichtigung des Fahrers eines Kraftfahrzeugs, das mit einer Abstandsfühleinrichtung und einem adaptivem Abstands- und Geschwindigkeitsregler ausgestattet ist, in dem eine Übernahmeaufforderung aktiviert wird, die dem Fahrer mitteilt, dass eine kritische Annäherung an ein Zielobjekt erfolgt.

Aus der DE 100 15 299 A1 ist ein solches Verfahren und eine entsprechende Vorrichtung bekannt. Eine Übernahmeaufforderung der Adaptiven Fahrgeschwindigkeitsregelung wird ausgegeben, um den Fahrer in Situationen, welche vom System nicht beherrscht werden können, aufzufordern, die Führung des Fahrzeuges manuell zu übernehmen. Die englische Übersetzung der Adaptiven Fahrgeschwindigkeitsregelung lautet adaptive cruise control, abgekürzt ACC. In den aktuellen Systemen wird die Verzögerung bestimmt, welche notwendig ist, um die Relativgeschwindigkeit zu einem in der eigenen Fahrspur befindlichen Fahrzeug abzubauen, bevor eine Kollision mit diesem Fahrzeug stattfinden würde. Kann die so bestimmte Verzögerung vom System nicht erreicht werden, muss eine Übernahmeaufforderung ausgegeben werden. Als Applikationsparameter stehen im wesentlichen die minimale Distanz zwischen eigenem Fahrzeug und Fremdfahrzeug, außerhalb welcher die Relativgeschwindigkeit abgebaut werden soll, und ein Beschleunigungsoffset, der zur maximal möglichen Verzögerung des Systems hinzuaddiert die Schwelle für die Übernahmeaufforderung darstellt, zur Verfügung.

Aus der DE 102 31 687 A1 ist ebenfalls ein solches Verfahren und eine entsprechende Vorrichtung bekannt. Insbesondere ist eine Distanz zum Fremdfahrzeug definiert, unterhalb derer eine Übernahmeaufforderung ausgegeben wird.

Da insbesondere die Möglichkeit eines Spurwechsels des eigenen Fahrzeugs in den aktuellen Systemen nicht berücksichtigt wird, wird eine Übernahmeaufforderung in gewöhnlichen Fahrsituationen tendenziell zu früh ausgegeben. Die zur Verfügung stehenden Parameter für die Warnung aufgrund der Systemgrenze bieten lediglich die Möglichkeit, die Warnschwelle insgesamt abzusenken, was wiederum dazu führt, dass in wirklich kritischen Situationen zu spät gewarnt wird. Die Parametrierung der Warnung aufgrund des Abstandes zum Fremdfahrzeug beruht nicht auf physikalischen Grundsätzen und ist somit nur mit extrem hohem Zeitaufwand so einzustellen, dass sich die Übernahmeaufforderung in allen Fahrsituationen wie gewünscht verhält.

Der Erfindung liegt von daher die Aufgabe zugrunde, ein verbessertes Verfahren und eine entsprechende Vorrichtung dazu anzugeben. Insbesondere soll eine Übernahmeaufforderung dargestellt werden, die basierend auf den Empfindungen des Fahrers genau in den Situationen warnt, in welchen ein über gewöhnliche Fahraufgaben mit ACC hinausgehendes Eingreifen des Fahrers notwendig wird. Gewöhnliche Fahraufgaben sind unter anderem die Lenkung des Fahrzeuges, Blinker setzen, Beobachtung des übrigen Verkehrs und so weiter.

Diese Aufgabe wird mit den Merkmalen der Hauptansprüche gelöst. Die Erfindung ist durch folgende Verfahrensschritte gekennzeichnet: ein Abstandswert für einen Abstand zwischen dem Kraftfahrzeug und einem Zielobjekt wird ermittelt, ein erster Streckenwert für eine Fahrerreaktionszeit wird ermittelt, ein zweiter Streckenwert für eine Verzögerung wird ermittelt, aus dem Abstandswert und den Streckenwerten wird ein voraussichtlicher Abstandswert ermittelt, der voraussichtlicher Abstandswert wird mit einem Schwellwert verglichen und unterschreitet der voraussichtlicher Abstandswert den Schwellwert, wird die Übernahmeaufforderungseinrichtung aktiviert. In der Abstandsfühleinrichtung der Vorrichtung ist also ein Abstandswert für einen Abstand zwischen dem Kraftfahrzeug und einem Zielobjekt ermittelbar, in dem adaptiven Abstands- und Geschwindigkeitsregler der Vorrichtung ist ein erster Streckenwert für eine Fahrerreaktionszeit, ein zweiter Streckenwert für eine Verzögerung, aus dem Abstandswert und den Streckenwerten ein voraussichtlicher Abstandswert ermittelbar und der voraussichtliche Abstandswert mit einem Schwellwert vergleichbar und die Übernahmeaufforderungseinrichtung der Vorrichtung ist dann aktivierbar, wenn der Abstandswert den Schwellwert unterschreitet. Der Kern der Erfindung basiert darauf, dass die Aktivierung der Übernahmeaufforderung in Abhängigkeit einer Fahrerreaktionszeit und einer Verzögerung erfolgt. Es wird dann gewarnt, wenn zur Vermeidung einer Kollision vom Fahrer eine Bremsung mit einer Verzögerung, auch als Mindestverzögerung bezeichnet, eingeleitet werden muss. Außerdem wird berücksichtigt, dass der Fahrer eine Reaktionszeit benötigt, um diese Bremsung zu beginnen. Die Reaktionszeit des Fahrers sowie die vom Fahrer zu erreichende Mindestverzögerung werden hierbei als Applikationsparameter zur Verfügung gestellt.

Der Fahrer erwartet eine Übernahmeaufforderung, wenn die aktuelle Fahrsituation ein sofortiges Eingreifen des Fahrers erfordert. Erkennt das System eine Situation, welche vom System zwar nicht beherrscht werden kann, in welcher jedoch ein Eingreifen des Fahrers zu einem späteren Zeitpunkt ausreicht, so soll noch keine Übernahmeaufforderung ausgegeben werden. Das Eingreifen des Fahrers kann durch Einleiten einer Bremsung oder durch ein Ausweichmanöver geschehen. Da vom ACC-System nicht erkannt werden kann, ob ein Ausweichmanöver möglich ist und ein Ausweichmanöver in kritischen Situationen auch später eingeleitet werden kann als ein Bremsmanöver, soll eine Warnung aufgrund einer notwendigen Bremsung erfolgen. Es wird ein typischer Bremsvorgang definiert. Reicht dieser definierte Bremsvorgang nicht aus, um eine Kollision zu vermeiden, soll eine Warnung ausgegeben werden. Damit wird erreicht, dass ein Fahrereingreifen über ein gewöhnliches Maß hinaus erforderlich ist. Das bedeutet, dass der Fahrer dem Verkehr wieder volle Aufmerksamkeit zu widmen hat.

In vorteilhafter Weise wird davon ausgegangen, dass die Verzögerung abhängig ist von der Geschwindigkeit des Fahrzeugs. Die Verzögerung bleibt während des Bremsvorganges konstant. Zugrunde gelegt wird allerdings die Geschwindigkeit, die während des Zeitpunktes der Detektion gefahren wird. Bei höherer Geschwindigkeit wird stärker abgebremst.

In vorteilhafter Weise wird anstelle einer Bremsung mit konstanter Verzögerung ein zeitabhängiger Bremsverlauf definiert. Mit zunehmender Zeit wird die negative Beschleunigung größer. Die Reaktionszeit kann in diesem Fall in diesem Verlauf integriert werden. In vorteilhafter Weise ist der Bremsverlauf sowohl abhängig von der Geschwindigkeit des Eigenfahrzeugs als auch zeitabhängig.

In vorteilhafter Weise ist ein Schwellwert und damit ein Sicherheitsabstand einstellbar. Eine Warnung wird bereits ausgegeben, wenn der definierte Bremsverlauf nicht ausreicht, um innerhalb eines Sicherheitsabstandes zum Vordermann die Relativgeschwindigkeit abzubauen.

In vorteilhafter Weise wird als Ausgangsposition nicht davon ausgegangen, dass sich das Fremdfahrzeug mit konstanter Geschwindigkeit bewegt. Es wird eine maximal mögliche Änderung der Geschwindigkeit des Fremdfahrzeuges definiert. Dadurch ergibt sich ein Unsicherheitsbereich um die berechnete Position des Fremdfahrzeuges während des Bremsvorgangs des Eigenfahrzeugs. Als Bedingung für eine Warnung wird in diesem Fall ein Eintreten in diesen Unsicherheitsbereich verwendet.

Alternativ dazu kann auch von der aktuellen Relativgeschwindigkeit und - beschleunigung ausgegangen werden und eine maximal mögliche Änderung der Beschleunigung des Fremdfahrzeuges definiert werden. Daraus ergibt sich wiederum der Unsicherheitsbereich der Position des Fremdfahrzeuges innerhalb dessen sich das Fahrzeug in Zukunft befinden kann. Ein Eintreten in diesen Bereich führt zu einer Warnung.

Die Fahrerübernahmeaufforderung kann mit wenigen Parametern auf unterschiedliche Verhaltenswünsche angepasst werden.

Zum besseren Verständnis der Erfindung werden nachstehend Ausführungsbeispiele anhand der Zeichnung näher erläutert.

Es zeigen

Fig. 1      ein Blockschaltbild einer Vorrichtung mit einer Abstandsfühleinrichtung, einem Abstands- und Geschwindigkeitsregler, einer Verzögerungseinrichtung, einer Fahrzeugantriebseinheit, einem Sensor, einem Bedienfeld und zwei Übernahmeaufforderungseinrichtungen,

Fig. 2A      ein Diagramm mit einem Abstand zweier Fahrzeuge aufgetragen über die Zeit in einer unkritischen Situation,

Fig. 2B      ein zweites Diagramm mit einem Abstand zweier Fahrzeuge aufgetragen über die Zeit in einer kritischen Situation und

Fig. 2C      ein Diagramm mit einem Abstand zweier Fahrzeuge aufgetragen über die Zeit mit einem Sicherheitsabstand.

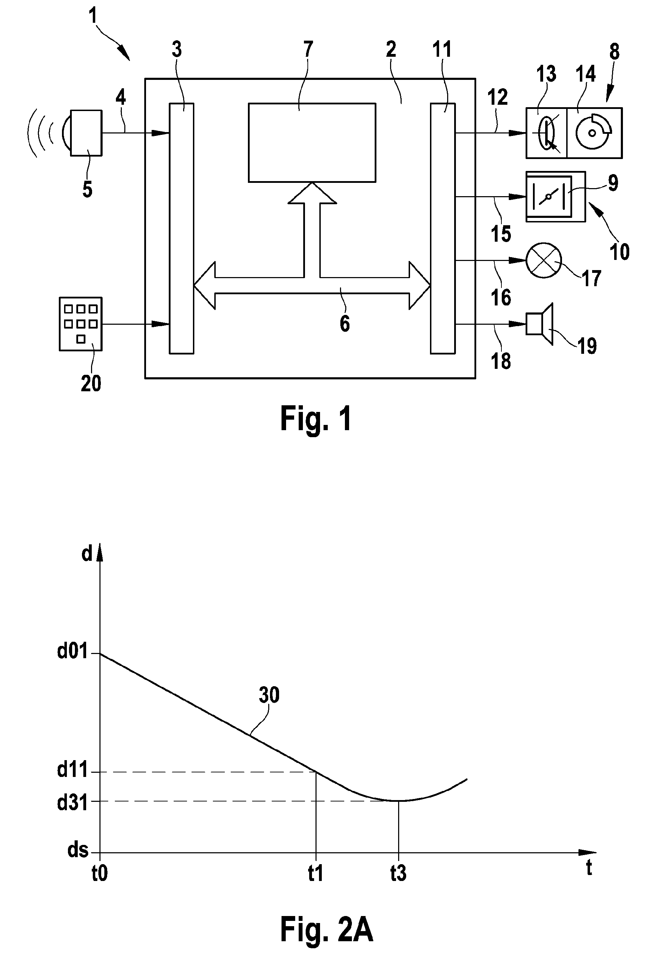

Figur 1 zeigt eine Vorrichtung 1 mit einem Abstands- und Geschwindigkeitsregler 2, der über eine Eingangsschaltung 3 verfügt. Mittels elektrisch leitfähiger Verbindungen 4 werden der Eingangsschaltung 3 des Abstands- und Geschwindigkeitsreglers 2 Ausgangssignale von einer Abstandsfühleinrichtung wie einem Radar- oder Lidarsensor 5 zugeführt. Der Radar- oder Lidarsensor 5 sendet Radar- oder Laserstrahlung aus, die zum Teil an Objekten reflektiert wird. Reflektierte Strahlung wird von dem Radar- oder Lidarsensor 5 empfangen. Im Falle eines Radarsensors kann die Radarstrahlung eine FMCW-Modulation oder eine Pulsmodulation aufweisen. Der Radar- oder Lidarsensor 5 erzeugt aus gemessenen Empfangssignalen Ausgangssignale, die dem Abstands- und Geschwindigkeitsregler 2 als Eingangssignale zugeführt werden. Diese Signale beinhalten Größen Abstand d der Objekte sowie Relativgeschwindigkeiten Vrel der Objekte in Bezug auf das abstands- und geschwindigkeitsgeregelte Fahrzeug. Die Objekte sind auch als Zielobjekte oder Fremdfahrzeuge bezeichnet. Diese Größen werden der Eingangsschaltung 3 zugeführt und mittels eines Datenaustauschsystems 6, das beispielsweise ein CAN-Bus sein kann, an eine Verarbeitungseinrichtung 7 weitergeleitet. Diese Verarbeitungseinrichtung 7 kann beispielsweise ein Mikroprozessor oder ein Signalprozessor sein, in dem aus den vom Sensor 5 gemessenen Größen Stell- und Steuergrößen gebildet werden. Hierzu ermittelt die Verarbeitungseinrichtung 7 aus der relativen Position der vom Sensor 5 erkannten Objekte sowie deren Abstand d und deren Relativgeschwindigkeit Vrel mindestens ein Zielobjekt, das für die Abstands- und Geschwindigkeitsregelung von besonderer Relevanz ist, da dieses Zielobjekt in besonderem Maß die Ausgangsgrößen beeinflusst. So erzeugt die Verarbeitungseinrichtung 7 Steuersignale für eine Verzögerungseinrichtung 8 des Fahrzeugs, Steuersignale für ein leistungsbestimmendes Stellelement 9 einer Fahrzeugantriebseinheit 10, das beispielsweise als Drosselklappenstellglied 9 oder als Kraftstoffeinspritzpumpe 9 ausgebildet sein kann, sowie Signale zur Aktivierung bzw. Deaktivierung einer Übernahmeaufforderung für den Fahrer des Fahrzeugs. Diese von der Verarbeitungseinrichtung 7 erzeugten Ausgangssignale werden mittels des Datenaustauschsystems 6 auf eine Ausgangsschaltung 11 ausgegeben. Über die Ausgangsschaltung 11 wird ein Verzögerungssignal über eine elektrisch leitfähige Verbindung 12 an die Verzögerungseinrichtung 8 des Fahrzeugs ausgegeben. Dieses Verzögerungssignal wird üblicherweise einer Bremsenansteuereinrichtung 13 zugeführt, die Bremsen 14 des Fahrzeugs entsprechend dem Verzögerungssignal betätigt. Weiterhin wird von der Ausgangsschaltung 11 über eine elektrisch leitfähige Verbindung 15 ein Beschleunigungssignal ausgegeben, das dem leistungsbestimmenden Stellelement 9 der Fahrzeugantriebseinheit 10 zugeführt wird. Durch das Beschleunigungssignal wird die Fahrzeugantriebseinheit 10 in entsprechender Weise gemäß den Reglerausgangsgrößen beeinflusst. Weiterhin kann über die Ausgangsschaltung 11 ein Übernahmeaufforderungssignal auf eine elektrisch leitfähige Verbindung 16 ausgegeben werden, das einer optischen Übernahmeaufforderungseinrichtung 17 zugeführt wird. Diese optische Übernahmeaufforderungseinrichtung 17 besteht beispielsweise aus einer Lichtquelle im Sichtbereich des Fahrers oder aus einer Klartextanzeige, die im Sichtbereich des Fahrers angebracht ist und dem Fahrer visuell signalisiert, dass die Verzögerungsfähigkeit nicht ausreicht, um eine kritische Annäherung des eigenen Fahrzeugs an ein Zielobjekt zu verhindern. In ähnlicher Weise kann von der Ausgangsschaltung 11 ein weiteres Übernahmeaufforderungssignal über eine elektrisch leitfähige Verbindung 18 an eine akustische Übernahmeaufforderungseinrichtung 19 ausgegeben werden. Diese akustische Übernahmeaufforderungseinrichtung 19 kann beispielsweise ein Summer oder ein Klingelton im Fahrzeuginnenraum sein oder aber eine Sprachausgabeeinrichtung sein, die den Fahrer zu einem Verzögerungseingriff auffordert. Über ein Bedienfeld 20 sind seitens des Fahrers Werte für eine gewünschte Fahrgeschwindigkeit eingebbar und ein Komfortprogramm einstellbar, das ein sportliches oder ein entspanntes Fahren zulässt.

Der Abstands- und Geschwindigkeitsregler 2 ist häufig als Komfortsystem ausgelegt und die Verzögerungsdynamik, die der Abstands- und Geschwindigkeitsregler 2 steuern kann, ist oftmals auf 2 bis 3 m/sek$^2$ begrenzt. Es wird angenommen, dass die Verzögerungsfähigkeit des Systems also auf maximal 3 m/sek$^2$ begrenzt ist. Eine zweite Verzögerungsfähigkeit ist kraftfahrzeug- und fahrerabhängig. Sie ist experimentell ermittelt und entspricht einem Bremsverhalten eines durchschnittlichen Fahrers. Sie wird deshalb auch als mittlere Verzögerung bezeichnet. Diese kann als Konstante oder zeitabhängig ausgelegt sein. Der absolute Wert einer mittleren Verzögerung liegt oberhalb des absoluten Wertes von 3 m/sek$^2$ und unterhalb des absoluten Wertes einer Vollbremsung.

Das bedeutet, dass das System eine Verzögerung aufgrund eines vorausfahrenden Fremdfahrzeuges und der Systemverzögerungsfähigkeit einleitet, allerdings noch keine Übernahmeaufforderung ausgibt. Diese wird erst dann ausgegeben, wenn die mittlere Verzögerung nicht ausreicht, eine kritische Annäherung zu verhindern.

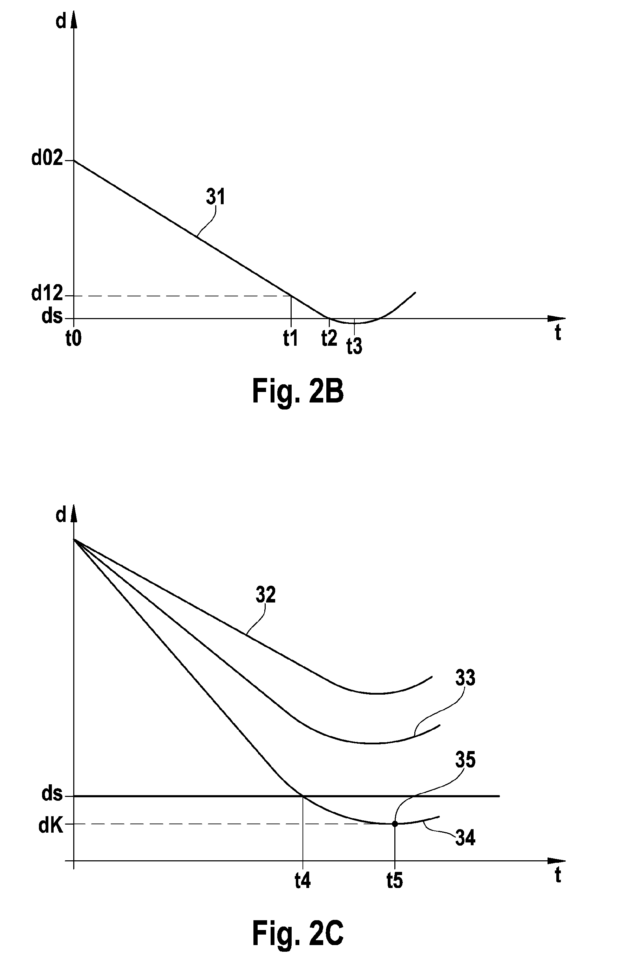

Figur 2A zeigt ein Diagramm mit einem Graphen 30, in dem der Abstand zweier Fahrzeuge über die Zeit aufgetragen ist. Eine erste Zeitdauer, die durch die Zeitpunkte t0 und t1 definiert ist, beschreibt eine Reaktionszeit des Fahrers. Während dieser Zeitdauer nähern sich das Fremdfahrzeug und das eigene Fahrzeug um eine Strecke d01 - d11 aneinander an. Eine zweite Zeitdauer, die durch die Zeitpunkte t1 und t3 definiert ist, beschreibt eine mittlere Verzögerung, in der das Fahrzeug gleichmäßig abgebremst wird. Zum Zeitpunkt t3 sind sich die beiden Fahrzeuge am nächsten, danach entfernen sie sich wieder voneinander. Der Zeitpunkt t3 bestimmt einen Kulminationspunkt.

Figur 2B zeigt ein Diagramm mit einem Graphen 31, in dem der Abstand zweier Fahrzeuge über die Zeit für eine kritische Annäherung aufgetragen ist. Die erste Zeitdauer, die durch die Zeitpunkte t0 und t1 definiert ist, beschreibt ebenfalls die Reaktionszeit des Fahrers. Während dieser Zeitdauer nähern sich das Fremdfahrzeug und das eigene Fahrzeug um eine Strecke d02 - d12 aneinander an. Die zweite Zeitdauer, die durch die Zeitpunkte t1 und t3 definiert ist, beschreibt ebenfalls die mittlere Verzögerung, in der das Fahrzeug gleichmäßig abgebremst wird. Allerdings würden sich die Fahrzeuge zum Zeitpunkt t2 berühren. Eine solche kritische Annäherung soll verhindert sein. Der Zeitpunkt t3 beschreibt einen Kulminationspunkt.

Mathematisch lassen sich diese Graphen 30 und 31 wie folgt beschreiben:

Zum Zeitpunkt t0 beträgt der Abstand d0. Das Fremdfahrzeug bewegt sich vor dem eigenen Fahrzeug mit einer konstanten Relativgeschwindigkeit vrel, die kleiner als Null ist und damit nähern sich das Fremdfahrzeug und das eigene Fahrzeug aneinander an. Es wird eine Fahrerreaktionszeit treak und eine mittlere Verzögerung aFZG definiert, die einer negativen Relativverzögerung arel entspricht. Daraus ergibt sich eine erste Gleichung, die eine Distanz d zum Fahrzeug beschreibt.

$$d(t) = d0 + vrel\ treak\ + vrel\ (t - treak) + \tfrac{1}{2}\ arel\ (t - treak)^2)$$

Die ersten beiden Summanden beschreiben die Distanz zwischen beiden Fahrzeugen nach der Reaktionszeit, der dritte und der vierte Summand beschreiben die zurückgelegte Wegstrecke während der Bremsung.

Daraus ergibt sich eine zweite Gleichung, die einen minimalen Abstand zum Fremdfahrzeug beschreibt:

$$dmin = d0 + vrel\ treak - v^2rel\ /\ 2arel$$

Gewarnt wird, wenn ein Sicherheitsabstand unterschritten wird, insbesondere dann, wenn eine Kollision nicht vermieden werden kann, wenn dmin kleiner oder gleich Null ist. Der einstellbare Sicherheitsabstand bildet dann den Schwellwert, der nicht unterschritten werden darf beziehungsweise soll. Der Sicherheitsabstand ds ist auch zu Null setzbar.

Damit ist die Näherung der beiden Fahrzeuge mittels der zwei definierten Werte, nämlich der Reaktionszeit treak und der mittleren Verzögerung äFZG, auch als Applikationsparameter bezeichnet, beschrieben.

Figur 2C zeigt ein Diagramm mit Graphen 32, 33 und 34. Auf der Ordinate ist eine Konstante ds eingetragen, die einen Sicherheitsabstand definiert. Der Graph 34 beschreibt den Abstand zweier Fahrzeuge, die sich voraussichtlich zu einem in der Zukunft liegenden Zeitpunkt t4 bis auf einen Sicherheitsabstand von ds annähern werden. Weil der Sicherheitsabstand von ds eingehalten werden soll, wird eine Warnung ausgegeben. Eine maximale Annäherung ist in einem Kulminationspunkt 35 zum Zeitpunkt t5 mit einem Abstand von dK gegeben.

**Patentansprüche**

1. Verfahren zur Benachrichtigung des Fahrers eines Kraftfahrzeuges mit einer Abstandsfühleinrichtung (5) und einem adaptiven Abstands- und Geschwindigkeitsregler (2), in dem eine Übernahmeaufforderungseinrichtung (17, 19) aktivierbar ist, die dem Fahrer mitteilt, dass eine kritische Annäherung an ein Zielobjekt erfolgt, **gekennzeichnet durch** folgende Verfahrensschritte:

   - ein Abstandswert (d0) für einen Abstand zwischen dem Kraftfahrzeug und einem Zielobjekt wird ermittelt,
   - ein erster Streckenwert für eine Fahrerreaktionszeit (treak) wird ermittelt,
   - ein zweiter Streckenwert für eine Verzögerung (aFZG) wird ermittelt,
   - aus dem Abstandswert (d0) und den Streckenwerten wird ein voraussichtlicher Abstandswert (dmin) ermittelt,
   - der voraussichtlicher Abstandswert (dmin) wird mit einem Schwellwert (ds) verglichen und
   - unterschreitet der voraussichtlicher Abstandswert (dmin) den Schwellwert (ds), wird die Übernahmeaufforderungseinrichtung (17, 19) aktiviert.

2. Verfahren nach Anspruch 1, **dadurch gekennzeichnet, dass** für die Fahrerreaktionszeit (treak) eine Konstante einstellbar ist.

3. Verfahren nach Anspruch 1, **dadurch gekennzeichnet, dass** für die Verzögerung (aFZG) eine Konstante einstellbar ist.

4. Verfahren nach Anspruch 1, **dadurch gekennzeichnet, dass** die Verzögerung (aFZG) in Abhängigkeit der Geschwindigkeit des Kraftfahrzeugs einstellbar ist.

5. Verfahren nach Anspruch 1 und/oder 4, **dadurch gekennzeichnet, dass** die Verzögerung (aFZG) zeitabhängig einstellbar ist.

6. Verfahren nach Anspruch 5, **dadurch gekennzeichnet, dass** die Fahrerreaktionszeit (treak) in den zeitabhängigen Verlauf integrierbar ist.

7. Verfahren nach Anspruch 1, **dadurch gekennzeichnet, dass** der Schwellwert (ds) einstellbar ist.

8. Verfahren nach Anspruch 1, **dadurch gekennzeichnet, dass** der Schwellwert (ds) in Abhängigkeit einer Verzögerung des Zielobjektes einstellbar ist.

9. Verfahren zur Benachrichtigung des Fahrers eines Kraftfahrzeuges mit einer Abstandsfühleinrichtung (5) und einem adaptiven Abstands- und Geschwindigkeitsregler (2), in dem eine Übernahmeaufforderungseinrichtung (17, 19) aktivierbar ist, die dem Fahrer mitteilt, dass eine kritische Annäherung an ein Zielobjekt erfolgt, **dadurch gekennzeichnet, dass** die Aktivierung der Übernahmeaufforderungseinrichtung (17, 19) in Abhängigkeit

   - einer Fahrerreaktionszeit (treak) und

- einer Verzögerung (aFZG) erfolgt.

**10.** Vorrichtung zur Benachrichtigung des Fahrers eines Kraftfahrzeuges mit einer Abstandsfühleinrichtung (5) und einem adaptiven Abstands- und Geschwindigkeitsregler (2), in dem eine Übernahmeaufforderungseinrichtung (17, 19) aktivierbar ist, die dem Fahrer mitteilt, dass eine kritische Annäherung an ein Zielobjekt erfolgt, **dadurch gekennzeichnet, dass** in der Abstandsfühleinrichtung (5) ein Abstandswert (d0) für einen Abstand zwischen dem Kraftfahrzeug und einem Zielobjekt ermittelbar ist, dass in dem adaptiven Abstands- und Geschwindigkeitsregler (2) ein erster Streckenwert für eine Fahrerreaktionszeit (treak), ein zweiter Streckenwert für eine Verzögerung (aFZG), aus dem Abstandswert (d0) und den Streckenwerten ein voraussichtlicher Abstandswert (dmin) ermittelbar und der voraussichtliche Abstandswert (dmin) mit einem Schwellwert (ds) vergleichbar ist und die Übernahmeaufforderungseinrichtung (17, 19) dann aktivierbar ist, wenn der Abstandswert (dmin) den Schwellwert (ds) unterschreitet.

**Fig. 1**

**Fig. 2A**

**Fig. 2B**

**Fig. 2C**

Europäisches
Patentamt

## EUROPÄISCHER RECHERCHENBERICHT

Nummer der Anmeldung

EP 06 11 5653

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 014 200 A (CHUNDRLIK WILLIAM J [US] ET AL) 7. Mai 1991 (1991-05-07) | 1,10 | INV. B60W30/16 B60W50/08 |
| A | * Zusammenfassung * * Abbildung 1 * * Abbildung 2 * * Abbildungen 4,N52 * * Abbildungen 2,N26 * * Spalte 2, Zeile 48 - Zeile 51 * * Spalte 5, Zeile 28 - Zeile 42 * ----- | 2-9 | |
| X | FR 2 841 518 A1 (PEUGEOT CITROEN AUTOMOBILES SA [FR]) 2. Januar 2004 (2004-01-02) | 9 | |
| A | * Seite 2, Zeile 29 - Zeile 30 * * Seite 4, Zeile 11 - Zeile 20 * * Seite 7, Zeile 13 * * Seite 8, Zeile 21 * * Seite 6, Zeile 29 * ----- | 1-8,10 | |
| A | DE 103 35 689 A1 (VISTEON GLOBAL TECH INC [US]) 26. Februar 2004 (2004-02-26) * das ganze Dokument * ----- | 1-10 | |
| A | US 5 684 473 A (HIBINO KATSUHIKO [JP] ET AL) 4. November 1997 (1997-11-04) * das ganze Dokument * ----- | 1-10 | |
| D,A | DE 100 15 299 A1 (BOSCH GMBH ROBERT [DE]) 4. Oktober 2001 (2001-10-04) * das ganze Dokument * ----- | 1-10 | |
| D,A | DE 102 31 687 A1 (BOSCH GMBH ROBERT [DE]) 22. Januar 2004 (2004-01-22) * das ganze Dokument * ----- | 1-10 | |

RECHERCHIERTE SACHGEBIETE (IPC)

B60T
B60W

Der vorliegende Recherchenbericht wurde für alle Patentansprüche erstellt

| Recherchenort | Abschlußdatum der Recherche | Prüfer |
|---|---|---|
| Den Haag | 18. Oktober 2006 | Ducher, Alban |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

EP 1 746 005 A1

**ANHANG ZUM EUROPÄISCHEN RECHERCHENBERICHT**
**ÜBER DIE EUROPÄISCHE PATENTANMELDUNG NR.**

EP 06 11 5653

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 5014200 | A | 07-05-1991 | DE | 69100568 D1 | 09-12-1993 |
| | | | DE | 69100568 T2 | 24-03-1994 |
| | | | EP | 0443644 A1 | 28-08-1991 |
| | | | JP | 2079037 C | 09-08-1996 |
| | | | JP | 5024461 A | 02-02-1993 |
| | | | JP | 7064230 B | 12-07-1995 |
| FR 2841518 | A1 | 02-01-2004 | EP | 1532028 A1 | 25-05-2005 |
| | | | WO | 2004002796 A1 | 08-01-2004 |
| DE 10335689 | A1 | 26-02-2004 | GB | 2391641 A | 11-02-2004 |
| | | | JP | 2004067085 A | 04-03-2004 |
| | | | US | 2004024529 A1 | 05-02-2004 |
| US 5684473 | A | 04-11-1997 | DE | 19510910 A1 | 28-09-1995 |
| | | | JP | 3189560 B2 | 16-07-2001 |
| | | | JP | 7262498 A | 13-10-1995 |
| DE 10015299 | A1 | 04-10-2001 | WO | 0172545 A1 | 04-10-2001 |
| | | | EP | 1185432 A1 | 13-03-2002 |
| | | | JP | 2003528763 T | 30-09-2003 |
| | | | US | 2003130783 A1 | 10-07-2003 |
| DE 10231687 | A1 | 22-01-2004 | WO | 2004007231 A1 | 22-01-2004 |
| | | | EP | 1521686 A1 | 13-04-2005 |
| | | | JP | 2005532636 T | 27-10-2005 |
| | | | US | 2006152350 A1 | 13-07-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10015299 A1

- DE 10231687 A1